# EUROPEAN PATENT APPLICATION

(11) **EP 4 819 750 A1**
(43) Date of publication of application: **07.10.2026**
(21) Application number: 24910882.0
(22) Date of filing: 18.12.2024
(51) Int. Cl.: H04W 74/0833

(54) **RANDOM ACCESS METHOD AND APPARATUS**

(30) Priority: 28.12.2023 CN 202311850126
(71) Applicant: Huawei Technologies Co., Ltd., Shenzhen, Guangdong 518129 (CN)
(72) Inventor: FAN, Bo, Shenzhen, Guangdong 518129 (CN)
(74) Representative: Körber, Martin Hans
(86) International application number: PCT/CN2024/140273
(87) International publication number: WO 2025/139951

(57) **Abstract**

This application relates to the field of communication technologies, and provides a random access method and an apparatus, to help a terminal device send a random access request message in a multi-TRP transmission scenario. In the method, the terminal device receives a first message and a PDCCH, where the first message is used to configure, for the terminal device, a first TAG and a second TAG that are in a same cell, the PDCCH indicates a path loss resource corresponding to the random access request message, and a TAG corresponding to the PDCCH is the first TAG or the second TAG; and determines, based on the path loss resource and the TAG corresponding to the PDCCH, a downlink timing used for the random access request message, and sends the random access request message based on the downlink timing, where the downlink timing is a first downlink timing corresponding to the first TAG or a second downlink timing corresponding to the second TAG. In this way, in the multi-TRP transmission scenario, the terminal device can send the random access request message by using a correct downlink timing.

## Description

This application claims priority to Chinese Patent Application No. 202311850126.3, filed with the China National Intellectual Property Administration on December 28, 2023 and entitled "RANDOM ACCESS METHOD AND APPARATUS", which is incorporated herein by reference in its entirety.

### TECHNICAL FIELD

This application relates to the communication field, and in particular, to a random access method and an apparatus.

### BACKGROUND

In a 5th generation (5th generation, 5G) mobile communication system, both uplink transmission and downlink transmission use a slot as a basic time unit, that is, data transmission can be performed once in each slot. When performing uplink transmission, a terminal device needs to know start time of its uplink slot, that is, an uplink timing; and when performing downlink reception, the terminal device needs to know start time of its downlink slot, that is, a downlink timing. In a single transmission and reception point (transmission and reception point, or Transmit/Receive Point, TRP) transmission scenario, a terminal needs to determine one uplink timing and one downlink timing. In a multi-TRP transmission scenario, a terminal device needs to determine a plurality of uplink timings and a plurality of downlink timings, where the plurality of uplink timings and the plurality of downlink timings are separately used to send or receive data for different TRPs corresponding to a single serving cell. The downlink timing may be determined by measuring downlink reference information sent by a network device, and the uplink timing may be determined based on the downlink timing, a timing advance offset indicated by the network device, and a timing advance (timing advance, TA) obtained in a random access procedure.

In the multi-TRP transmission scenario, for example, in a scenario in which one cell corresponds to two TRPs, a network device (a general term for a plurality of TRPs) sends a physical downlink control channel (physical downlink control channel, PDCCH) to the terminal device, to indicate the terminal device to send a random access request message to the network device. However, in this case, the terminal device does not know a specific TRP to which the random access request message is to be sent. Therefore, in the multi-TRP transmission scenario, how the terminal device sends the random access request message is a problem to be resolved urgently.

### SUMMARY

Embodiments of this application provide a random access method and an apparatus, to help a terminal device send a random access request message in a multi-TRP (two or more TRPs) transmission scenario.

To achieve the foregoing objective, this application uses the following technical solutions.

According to a first aspect, a random access method is provided. The method may be performed by a terminal device, or may be performed by a component in the terminal device, for example, a processor, a chip, or a chip system in the terminal device, or may be implemented by a logical module or software that can implement all or a part of functions of the terminal device. The following provides descriptions by using an example in which the method is performed by the terminal device. The method includes: receiving a first message, where the first message is used to configure, for the terminal device, a first timing advance group TAG and a second TAG that are in a same cell; receiving a PDCCH, where the PDCCH indicates a path loss resource corresponding to the random access request message, and a TAG corresponding to the PDCCH is the first TAG or the second TAG; and determining, based on the path loss resource and the TAG corresponding to the PDCCH, a downlink timing used for the random access request message, and sending the random access request message based on the downlink timing, where the downlink timing is a first downlink timing corresponding to the first TAG or a second downlink timing corresponding to the second TAG.

In a multi-TRP transmission scenario, when sending a random access request message to a network device based on a PDCCH, the terminal device does not know a specific TRP to which the random access request message is to be sent, in other words, the terminal device does not know a specific downlink timing that is to be used to send the random access request message. It can be learned from the method in the first aspect that the terminal device may determine, based on the path loss resource and the TAG corresponding to the PDCCH, the downlink timing used for the random access request message, for example, determine, based on a relationship that is indicated by using the path loss resource and that is between the TAG corresponding to the PDCCH and a TAG corresponding to the random access request message, the TAG corresponding to the random access request message, and determine, based on the TAG, the downlink timing used for the random access request message. In this way, in the multi-TRP transmission scenario, the terminal device can send the random access request message by using a correct downlink timing.

It may be understood that the first TAG and the second TAG each correspond to one TRP in the two TRPs corresponding to the cell. For example, the cell corresponds to TRP #1 and TRP #2. The first TAG corresponds to the TRP #1, and the second TAG corresponds to the TRP #2; or the first TAG corresponds to the TRP #2, and the second TAG may correspond to the TRP #1.

In a possible design solution, the path loss resource is a first path loss resource or a second path loss resource, the first path loss resource is a quasi co-location QCL reference signal resource in a transmission configuration indicator TCI state used by the PDCCH, and the second path loss resource is a synchronization signal and physical broadcast channel block SSB indicated in the PDCCH. It may be understood that the first path loss resource may indicate that the TAG corresponding to the PDCCH is the same as a TAG corresponding to the random access request message, and the second path loss resource may indicate that the TAG corresponding to the PDCCH is different from the TAG corresponding to the random access request message.

Optionally, when the path loss resource is the first path loss resource, the TAG corresponding to the PDCCH is the same as a TAG corresponding to the random access request message; or when the path loss resource is the second path loss resource, the TAG corresponding to the PDCCH is different from a TAG corresponding to the random access request message. It may be understood that the TAG corresponding to the random access request message is the first TAG or the second TAG. In this way, the TAG corresponding to the random access request message can be accurately determined based on the path loss resource and the TAG corresponding to the PDCCH.

Further, when the path loss resource is the second path loss resource, if the PDCCH corresponds to the first TAG, the random access request message corresponds to the second TAG; or if the PDCCH corresponds to the second TAG, the random access request message corresponds to the first TAG.

Optionally, the determining, based on the path loss resource and the TAG corresponding to the PDCCH, the downlink timing used for the random access request message includes: if the PDCCH corresponds to the first TAG, and the path loss resource is the first path loss resource, determining that the first downlink timing is used for the random access request message; or if the PDCCH corresponds to the first TAG, and the path loss resource is the second path loss resource, determining that the second downlink timing is used for the random access request message; or if the PDCCH corresponds to the second TAG, and the path loss resource is the first path loss resource, determining that the second downlink timing is used for the random access request message; or if the PDCCH corresponds to the second TAG, and the path loss resource is the second path loss resource, determining that the first downlink timing is used for the random access request message. It may be understood that the TAG corresponding to the random access request message may be determined based on the path loss resource and the TAG corresponding to the PDCCH, and the downlink timing used for the random access request message may be determined based on the TAG. For example, if the PDCCH corresponds to the first TAG, and the path loss resource is the first path loss resource, the random access request message corresponds to the first TAG, and the first downlink timing is used for the random access request message. In this way, the downlink timing used for the random access request message can be accurately determined based on the path loss resource and the TAG corresponding to the PDCCH.

In a possible design solution, the TAG corresponding to the PDCCH is a TAG associated with the TCI state used by the PDCCH. In other words, the TAG associated with the TCI state used by the PDCCH is the first TAG or the second TAG.

In a possible design solution, the determining, based on the path loss resource and the TAG corresponding to the PDCCH, the downlink timing used for the random access request message includes: when a first condition is met, determining, based on the path loss resource and the TAG corresponding to the PDCCH, the downlink timing used for the random access request message, where the first condition includes one or a combination of the following: The network device configures, for the terminal device, two control channel groups that are in the cell, the network device configures, for the terminal device, two TAGs that are in the cell, the network device does not configure, for the terminal device, an additional cell corresponding to the cell, or a TCI state activated by the network device for the terminal device is not associated with an additional cell corresponding to the cell. It may be understood that the first condition may indicate that a current scenario is a multi-TRP scenario, for example, a scenario in which one cell corresponds to two TRPs. In this case, a terminal device may determine, based on a path loss resource and a TAG corresponding to a PDCCH, a downlink timing used for a random access request message. In this way, in a single-TRP scenario, a terminal device is not to determine, based on a path loss resource and a TAG corresponding to a PDCCH, a downlink timing used for a random access request message, so that unnecessary overheads are not generated.

In a possible design solution, the first message is a radio resource control RRC message. In other words, a message in a conventional technology may be reused to configure the first TAG and the second TAG for the terminal device, so that implementation difficulty can be reduced.

According to a second aspect, a communication apparatus is provided. The communication apparatus includes modules configured to perform the method according to the first aspect, for example, a transceiver module and a processing module. For example, the transceiver module indicates receiving and sending functions of the communication apparatus, and the processing module is configured to perform a function of the communication apparatus other than the receiving and sending functions.

The transceiver module is configured to receive a first message, where the first message is used to configure, for a terminal device, a first timing advance group TAG and a second TAG that are in a same cell. The transceiver module is further configured to receive a PDCCH, where the PDCCH indicates a path loss resource corresponding to a random access request message, and a TAG corresponding to the PDCCH is the first TAG or the second TAG. The processing module is configured to determine, based on the path loss resource and the TAG corresponding to the PDCCH, a downlink timing used for the random access request message, where the downlink timing is a first downlink timing corresponding to the first TAG or a second downlink timing corresponding to the second TAG. The transceiver module is further configured to send the random access request message based on the downlink timing.

In a possible design solution, the path loss resource is a first path loss resource or a second path loss resource, the first path loss resource is a quasi co-location QCL reference signal resource in a transmission configuration indicator TCI state used by the PDCCH, and the second path loss resource is a synchronization signal and physical broadcast channel block SSB indicated in the PDCCH.

Optionally, the processing module is specifically configured to: if the PDCCH corresponds to the first TAG, and the path loss resource is the first path loss resource, determine that the first downlink timing is used for the random access request message; or if the PDCCH corresponds to the first TAG, and the path loss resource is the second path loss resource, determine that the second downlink timing is used for the random access request message; or if the PDCCH corresponds to the second TAG, and the path loss resource is the first path loss resource, determine that the second downlink timing is used for the random access request message; or if the PDCCH corresponds to the second TAG, and the path loss resource is the second path loss resource, determine that the first downlink timing is used for the random access request message.

In a possible design solution, the processing module is specifically configured to: when a first condition is met, determine, based on the path loss resource and the TAG corresponding to the PDCCH, the downlink timing used for the random access request message, where the first condition includes one or a combination of the following: The network device configures, for the terminal device, two control channel groups that are in the cell, the network device configures, for the terminal device, two TAGs that are in the cell, the network device does not configure, for the terminal device, an additional cell corresponding to the cell, or a TCI state activated by the network device for the terminal device is not associated with an additional cell corresponding to the cell.

Optionally, the transceiver module may include a sending module and a receiving module. The sending module is configured to implement a sending function of the communication apparatus according to the second aspect, and the receiving module is configured to implement a receiving function of the communication apparatus according to the second aspect.

Optionally, the communication apparatus according to the second aspect may further include a storage module. The storage module stores a program or instructions. When the processing module executes the program or the instructions, the communication apparatus is caused to perform the method according to the first aspect.

It may be understood that the communication apparatus according to the second aspect may be a terminal device, or may be a chip (system) or another component or assembly that may be disposed in a terminal device, or may be an apparatus including a terminal device. This is not limited in this application.

In addition, for a technical effect of the communication apparatus according to the second aspect, refer to the technical effect of the method according to the first aspect. Details are not described herein again.

According to a third aspect, a communication apparatus is provided. The communication apparatus includes a processor. The processor is configured to perform the method according to any one of the possible implementations of the first aspect.

In a possible design solution, the communication apparatus according to the third aspect may further include a transceiver. The transceiver may be a transceiver circuit or an interface circuit. The transceiver may be used by the communication apparatus according to the third aspect to communicate with another communication apparatus.

In a possible design solution, the communication apparatus according to the third aspect may further include a memory. The memory and the processor may be integrated together, or may be disposed separately. The memory may be configured to store a computer program and/or data related to the method according to any one of the first aspect.

In this embodiment of this application, the communication apparatus according to the third aspect may be the terminal device according to the first aspect, or a chip (system) or another component or assembly that may be disposed in the terminal device, or an apparatus including the terminal device.

In addition, for a technical effect of the communication apparatus according to the third aspect, refer to the technical effect of the method according to any one of the implementations of the first aspect. Details are not described herein again.

According to a fourth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In this embodiment of this application, the communication apparatus according to the fourth aspect may be the terminal device according to the first aspect, or a chip (system) or another component or assembly that may be disposed in the terminal device, or an apparatus including the terminal device.

In addition, for a technical effect of the communication apparatus according to the fourth aspect, refer to the technical effect of the method according to any one of the implementations of the first aspect. Details are not described herein again.

According to a fifth aspect, a communication apparatus is provided, and includes a processor and a memory. The memory is configured to store a computer program, and when the processor executes the computer program, the communication apparatus is caused to perform the method according to any one of the implementations of the first aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the terminal device according to the first aspect, or a chip (system) or another component or assembly that may be disposed in the terminal device, or an apparatus including the terminal device.

In addition, for a technical effect of the communication apparatus according to the fifth aspect, refer to the technical effect of the method according to any one of the implementations of the first aspect. Details are not described herein again.

According to a sixth aspect, a communication apparatus is provided, including a processor and an interface circuit. The processor is configured to: communicate with another apparatus through the interface circuit, and perform the method according to the first aspect. There are one or more processors.

According to a seventh aspect, a communication chip is provided. The communication chip stores instructions. When the chip is run on a communication device, the method according to any implementation of the first aspect is implemented.

According to an eighth aspect, a communication chip is provided, including a logic circuit and a communication interface. The logic circuit is configured to execute computer instructions, and the communication interface is used by the communication chip to communicate with another apparatus or chip. When the logic circuit executes the computer instructions, the method according to any one of the implementations of the first aspect is implemented.

According to a ninth aspect, a communication chip is provided, including a processor, configured to invoke a computer program or computer instructions in a memory, so that the processor performs any implementation of the first aspect.

Optionally, the processor is coupled to the memory through an interface.

According to a tenth aspect, a communication system is provided. The communication system includes a terminal device and a network device that are configured to perform the method according to the first aspect. The network device is configured to send a first message and a PDCCH.

According to an eleventh aspect, a computer-readable storage medium is provided, including a computer program or instructions. When the computer program or the instructions are run on a computer, the computer is caused to perform the method according to any one of the possible implementations of the first aspect.

According to a twelfth aspect, a computer program product is provided, including a computer program or instructions. When the computer program or the instructions are run on a computer, the computer is caused to perform the method according to any one of the possible implementations of the first aspect.

### BRIEF DESCRIPTION OF DRAWINGS

FIG. 1 is a diagram of uplink and downlink slots of a network device and uplink and downlink slots of a terminal device according to an embodiment of this application;
FIG. 2 is a schematic flowchart of a random access procedure according to an embodiment of this application;
FIG. 3 is a diagram of an architecture of a communication system according to an embodiment of this application;
FIG. 4 is a schematic flowchart of a random access method according to an embodiment of this application;
FIG. 5 is a diagram 1 of a structure of a communication apparatus according to an embodiment of this application; and
FIG. 6 is a diagram 2 of a structure of a communication apparatus according to an embodiment of this application.

### DESCRIPTION OF EMBODIMENTS

For ease of understanding, the following first describes technical terms in embodiments of this application.

### 1. Downlink timing and uplink timing

In a 5G mobile communication system, both uplink transmission and downlink transmission use a slot as a basic time unit, that is, data transmission is performed once in each slot. Slots are classified into downlink slots and uplink slots.

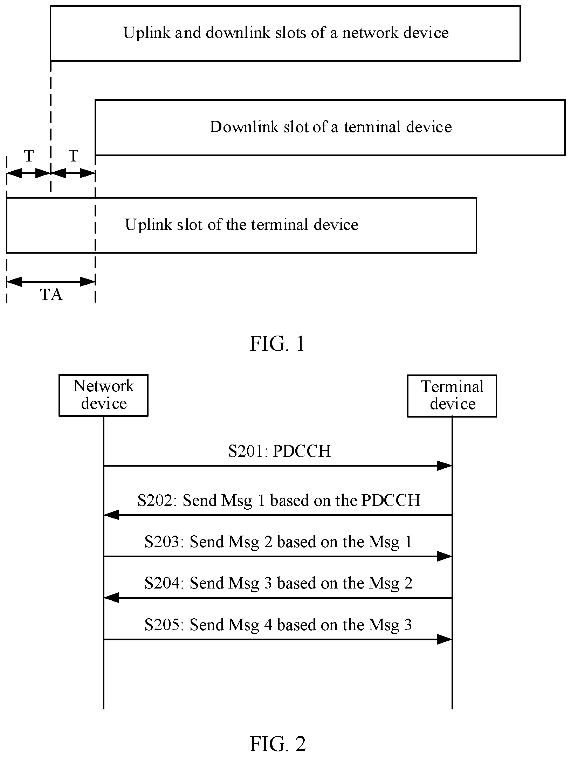

A network device starts to send a signal at start time of a downlink slot corresponding to the network device, and a terminal device starts to receive the signal at start time of a downlink slot corresponding to the terminal device. The signal sent by the network device to the terminal device experiences a specific propagation delay. Therefore, the start time of the downlink slot of the network device is not synchronized with that of the terminal device. In other words, the start time of the downlink slot of the terminal device is later than the start time of the downlink slot of the network device. As shown in FIG. 1, if signal propagation time is T, start time of a downlink slot of a terminal device is later than start time of a downlink slot of a network device by T, in other words, the start time of the downlink slot of the network device is earlier than the start time of the downlink slot of the terminal device by T.

The terminal device starts to send a signal at start time of an uplink slot corresponding to the terminal device, and the network device starts to receive information at start time of an uplink slot corresponding to the network device. Information sent by the terminal device to the network device experiences a specific propagation delay. Therefore, the start time of the uplink slot of the terminal device is not synchronized with that of the network device. In other words, the start time of the uplink slot of the network device is later than the start time of the uplink slot of the terminal device. Still refer to FIG. 1. The start time of the uplink slot of the network device is later than the start time of the uplink slot of the terminal device by T, in other words, the start time of the uplink slot of the terminal device is earlier than the start time of the uplink slot of the network device by T.

The uplink slot and the downlink slot of the network device are generally aligned. Assuming that the start time of the uplink slot and the start time of the downlink slot of the network device are t0, the start time of the downlink slot of the terminal device is t0-T, and the start time of the uplink slot of the terminal device is t0+T.

To perform downlink reception, the terminal device needs to know the start time of the downlink slot of the terminal device, and the start time is a downlink timing of the terminal device. The downlink timing of the terminal device may be obtained by measuring a downlink reference signal. To be specific, the network device may send a downlink reference signal to the terminal device, and the terminal device measures the reference signal, and uses, as the downlink timing of the terminal device, time at which the reference signal is received earliest.

To perform uplink transmission, the terminal device needs to know the start time of the uplink slot of the terminal device. According to a protocol, the terminal device needs to send an uplink signal at specific start time, so that time at which the uplink signal arrives at the network device is exactly the start time of the uplink slot of the network device, and the specific start time is an uplink timing of the terminal device.

The uplink timing of the terminal device may be determined through a random access procedure. A specific procedure is as follows: The terminal device sends, to the network device by using a downlink timing (t0+T), a random access request message, namely, a physical random access channel (physical random access channel, PRACH) message. The network device receives the random access request message at t0+2T, and subtract the start time t0 of the uplink slot of the network device from the time at which the random request message is received, to obtain a time difference 2T, where the time difference is time elapsed during two transmissions of the random access request message between the network device and the terminal device, and the time difference is also referred to as an uplink timing advance (timing advance, TA). The network device notifies the terminal device of the time difference, and the terminal device performs uplink transmission in advance of the downlink timing of the terminal device by the time difference, that is, performs uplink transmission at t0+T-2T. In this way, it can be ensured that the time at which the uplink signal arrives at the network device is the start time t0 of the uplink slot of the network device.

It may be understood that the foregoing is based on a prerequisite that the start time of the uplink slot of the network device is the same as the start time of the downlink slot of the network device. However, in some cases, the start time of the uplink slot of the network device may be different from the start time of the downlink slot of the network device. For example, in a time division duplex (time division duplex, TDD) system, it takes time for a network device to perform uplink-downlink switching. Consequently, there is a timing offset (denoted as TA_offset) between an uplink slot and a downlink slot. In this case, when performing uplink transmission, a terminal device needs to use TA_offset in addition to the foregoing timing advance. In other words, the terminal device needs to perform uplink sending in advance of a downlink timing of the terminal device by time of TA_offset and the TA. That is, a total advance of the uplink slot relative to the downlink slot is: TA_offset+TA determined in the random access procedure. In addition, in this case, the time at which the terminal device sends the random access request message is not the downlink timing of the terminal device, but is in advance of the downlink timing of the terminal device by TA_offset.

It may be further understood that, in a single-TRP transmission scenario, a terminal device needs to determine one downlink timing and one uplink timing. In other words, in this case, the terminal device needs to determine one TA_offset and one TA. In a two-TRP transmission scenario, a terminal device needs to determine two downlink timings and two uplink timings. In other words, the terminal device needs to determine one TA_offset and two TAs.

### 2. Random access (random access channel, RA)

A terminal device may access a network through a random access procedure, to implement uplink and downlink synchronization with a network device. The random access procedure is a process starting from the terminal device sending a random access preamble to start attempting to access the network and ending before a basic signaling connection is established between the terminal device and the network. In other words, the terminal device may access the network through the random access procedure. The random access procedure may be triggered by some events. For example, the terminal device may perform initial access in an idle state, or perform a radio resource control (radio resource control, RRC) layer connection resume process in an inactive state, or the network device sends a PDCCH to the terminal device.

As shown in FIG. 2, a random access procedure in 5G NR mainly includes the following five steps of S201 to S205. The following separately provides descriptions.

S201: A network device sends a PDCCH to a terminal device. Correspondingly, the terminal device receives the PDCCH from the network device.

The PDCCH may be used to trigger the random access procedure, that is, the PDCCH may indicate the terminal device to send a random access request message to the network device.

S202: The terminal device sends a message (message, Msg) 1 to the network device based on the PDCCH. Correspondingly, the network device receives the Msg 1 from the terminal device.

The Msg 1 may also be referred to as a random access request message, and includes a preamble sequence, namely, a preamble. A function of the preamble sequence is to notify the network device that there is a random access request message, causing the network device to calculate a transmission delay between the network device and the terminal device, so that the network device calibrates an uplink timing, and notifies the terminal device of calibration information via TA time adjustment information.

It may be understood that time at which the terminal device sends the Msg 1 is a downlink timing of the terminal device plus TA_offset.

S203: The network device sends Msg 2 to the terminal device based on the Msg 1. Correspondingly, the terminal device receives the Msg 2 from the network device.

The network device estimates a TA of the terminal device based on the received Msg 1, and sends a TA value the terminal device via the Msg 2. The Msg 2 is a response message of the Msg 1, and may also be referred to as a random access response (random access response, RAR). The Msg 2 may include a frequency hopping flag, physical uplink shared channel (physical uplink shared channel, PUSCH) frequency resource allocation, an uplink grant, a temporary cell radio network device temporary identifier, and the like. The uplink grant indicates a transmission resource of Msg 3.

S204: The terminal device sends the Msg 3 to the network device based on the Msg 2. Correspondingly, the network device receives the Msg 3 from the terminal device.

After receiving the Msg 2, the terminal device may send the Msg 3 on the transmission resource indicated by the uplink grant.

S205: The network device sends Msg 4 to the terminal device based on the Msg 3. Correspondingly, the terminal device receives the Msg 4 from the network device.

After receiving the Msg 3, the network device sends the Msg 4 to the terminal device, to indicate that the terminal device successfully performs access.

It may be understood that, in a single-TRP transmission scenario, a terminal device needs to determine one downlink timing and one uplink timing. In a multi-TRP transmission scenario, a terminal device needs to determine a plurality of uplink timings and a plurality of downlink timings, where the plurality of uplink timings and the plurality of downlink timings are separately used to send or receive data for different TRPs that are in one serving cell. In addition, in the multi-TRP transmission scenario, a network device sends a PDCCH to the terminal device, to indicate the terminal device to send a random access request message to the network device. However, in this case, the terminal device does not know a specific TRP to which the random access request message is to be sent, that is, the terminal device does not know a specific downlink timing that is to be used. Therefore, in the multi-TRP transmission scenario, how the terminal device sends the random access request message is a problem to be resolved urgently.

For the foregoing technical problem, embodiments of this application provide the following technical solutions, to help a terminal device send a random access request message in a multi-TRP transmission scenario.

The following describes technical solutions of this application with reference to the accompanying drawings.

The technical solutions in embodiments of this application may be applied to various communication systems, for example, a 4th generation (4th generation, 4G) mobile communication system like a long term evolution (long term evolution, LTE) system, a 5th generation (5th generation, 5G) mobile communication system like a new radio (new radio, NR) system, and a future communication system after 5G like a 6th generation (6th generation, 6G) mobile communication system; or may be applied to a wireless fidelity (wireless fidelity, Wi-Fi) system, a vehicle-to-everything (vehicle-to-everything, V2X) communication system, a device-to-device (device-to-device, D2D) communication system, an internet of vehicles communication system, or the like.

All aspects, embodiments, or features are presented in this application by describing a system that may include a plurality of devices, assemblies, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, terms such as "example" or "for example" are for representing giving an example, an illustration, or a description. Any embodiment or design solution described as an "example" in this application should not be explained as being more preferred or having more advantages than another embodiment or design solution. Exactly, the term "example" is to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. Terms "of (of)", "corresponding, relevant (corresponding, relevant)", and "corresponding (corresponding)" may be sometimes interchangeably used. It should be noted that meanings expressed by the terms are matchable when differences of the terms are not emphasized. In addition, "/" mentioned in this application may indicate an "or" relationship.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

For ease of understanding embodiments of this application, a communication system applicable to an embodiment of this application is first described.

The communication system includes a terminal device and a network device. It may be understood that, in embodiments of this application, one cell corresponds to a plurality of TRPs. For example, one cell corresponds to two TRPs. The network device may be understood as a general term of all devices on a network side. That is, the plurality of TRPs may be collectively referred to as a network device. For the terminal device and the network device, respectively refer to the following related descriptions of a "terminal device 120" and a "network device 110". Details are not described herein again. In addition, the communication system may further include another network device and/or another terminal device.

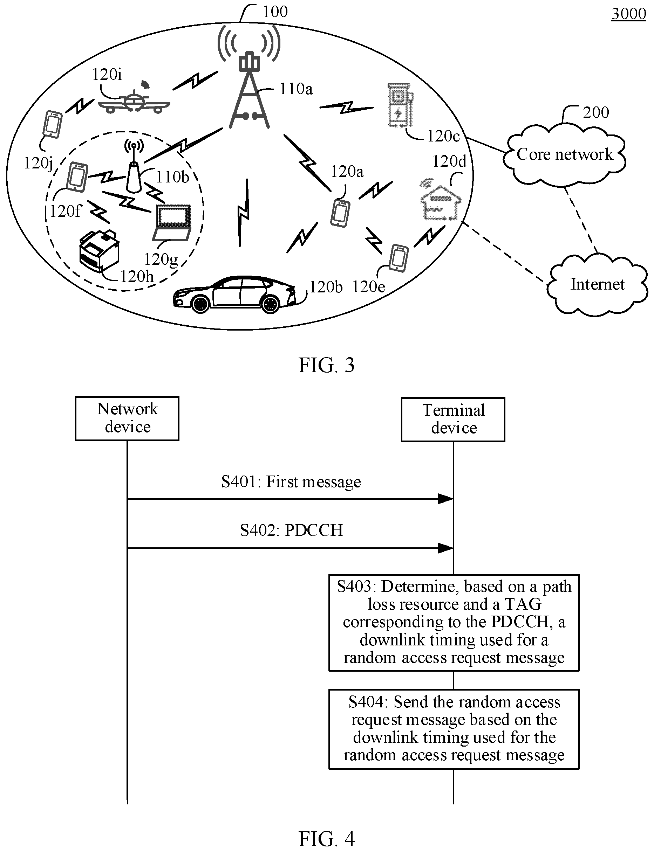

For ease of understanding of embodiments of this application, an application scenario used in this application is described by using an architecture of a communication system shown in FIG. 3 as an example. FIG. 3 is a diagram of a possible and non-limiting system. As shown in FIG. 3, the communication system 3000 includes a radio access network (radio access network, RAN) 100 and a core network (core network, CN) 200. The RAN 100 includes at least one network device (for example, 110a and 110b in FIG. 3, collectively referred to as 110) and at least one terminal device (for example, 120a to 120j in FIG. 3, collectively referred to as 120). The RAN 100 may also include another RAN node, for example, a wireless relay device and/or a wireless backhaul device (not shown in FIG. 3). The terminal device 120 is connected to the network device 110 in a wireless manner. The network device 110 is connected to the core network 200 in a wireless or wired manner. The core network device in the core network 200 and the network device 110 in the RAN 100 may be respectively different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system like an LTE system, a 5G mobile communication system like an NR system, and a communication system evolved after 5G like a 6G mobile communication system; or may be used in a Wi-Fi system, a V2X communication system, a D2D communication system, an internet of vehicles communication system, or the like. The RAN 100 may alternatively be an open radio access network (open radio access network, O-RAN or ORAN), a cloud radio access network (cloud radio access network, CRAN), or a Wi-Fi system. The RAN 100 may alternatively be a communication system that integrates two or more of the foregoing systems.

The terminal device and the network device provided in embodiments of this application may be used in the network device 110, or may be used in the terminal device 120. It may be understood that FIG. 3 shows only a possible communication system architecture to which embodiments of this application may be applied. In another possible scenario, the communication system architecture may alternatively include another device.

The network device 110 is a node in the RAN, and may also be referred to as an access network device, or may be referred to as a RAN node (or device). The network device 110 is configured to help the terminal device implement wireless access. A plurality of network devices 110 in the communication system 3000 may be nodes of a same type, or may be nodes of different types. In some scenarios, roles of the network device 110 and the terminal device 120 are relative. For example, the network element 120i in FIG. 3 may be a helicopter or an uncrewed aerial vehicle, and may be configured as a mobile base station. For the terminal device 120j that accesses the RAN 100 via the network element 120i, the network element 120i is a base station. However, for the network element 110a, the network element 120i is a terminal device. Both the network device 110 and the terminal device 120 are sometimes referred to as communication apparatuses. For example, the network elements 110a and 110b in FIG. 3 may be understood as communication apparatuses with a base station function, and the network element 120a to the network element 120j may be understood as communication apparatuses with a terminal device function.

In a possible scenario, the network device may be a base station (base station), an evolved NodeB (evolved NodeB, eNodeB), a TRP, a transmitting point (transmitting point, TP), a next-generation NodeB (next-generation NodeB, gNB), a next-generation base station in a 6G mobile communication system, a base station in a future mobile communication system, a satellite, an access point (access point, AP) in a Wi-Fi system, such as a home gateway, a router, a server, a switch, or a bridge, an integrated access and backhaul (integrated access and backhaul, IAB) node, a network device that is in a non-terrestrial network (non-terrestrial network, NTN) communication system of a mobile switching center and that may be deployed on a high-altitude platform or a satellite, or the like. The network device may be a macro base station (for example, 110a in FIG. 3), a micro base station or an indoor base station (for example, 110b in FIG. 3), a relay node or a donor node, or a radio controller in a CRAN scenario. Alternatively, the network device may be a device that functions as a base station in D2D communication, internet of vehicles communication, uncrewed aerial vehicle communication, or machine communication. Optionally, the network device may be a server, a wearable device, a vehicle, a vehicle-mounted device, or the like. For example, an access network device in a V2X technology may be a road side unit (road side unit, RSU).

In another possible scenario, a plurality of network devices collaborate to assist the terminal in implementing wireless access, and different network devices respectively implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It can be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O (open)-CU, the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

In embodiments of this application, a form of the network device is not limited. An apparatus configured to implement a function of the network device may be the network device; or may be an apparatus that can support the network device in implementing the function, for example, a chip system. The apparatus may be mounted in the network device or used in a matching manner with the network device.

The terminal device 120 may also be referred to as user equipment (user equipment, UE), a mobile station (mobile station, MS), a mobile terminal (mobile terminal, MT), a user apparatus, a terminal device, an access terminal, a subscriber unit, a subscriber station, a mobile station, a remote station, a remote terminal, a mobile device, a user terminal, a wireless communication device, a user agent, a user apparatus, or the like, or a device configured to provide voice or data connectivity for a user, or may be an internet of things device. For example, the terminal device includes a handheld device, a vehicle-mounted device, or the like that has a wireless connection function. Currently, the terminal device may be a mobile phone (mobile phone), a pad (Pad), a computer having a wireless transceiver function, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device functioning as a terminal function in D2D communication.

A device form of the terminal is not limited in embodiments of this application. An apparatus configured to implement a function of the terminal device may be the terminal device; or may be an apparatus that can support the terminal device in implementing the function, for example, a chip system. The apparatus may be mounted in the terminal device or used in a matching manner with the terminal device. In embodiments of this application, the chip system may include a chip, or may include a chip and another discrete device.

It should be noted that, the solutions in embodiments of this application may be further applied to another communication system, and a corresponding name may also be replaced with a name of a corresponding function in the another communication system. In addition, a network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

In a communication system, a terminal device may determine, based on a path loss resource and a TAG corresponding to a PDCCH, a downlink timing used for a random access request message, for example, determine, based on a relationship that is indicated by using the path loss resource and that is between the TAG corresponding to the PDCCH and a TAG corresponding to the random access request message, the downlink timing used for the random access request message. In this way, in the multi-TRP transmission scenario, the terminal device can send the random access request message by using a correct downlink timing.

For ease of understanding, the following specifically describes, with reference to FIG. 4, a random access method provided in embodiments of this application. The random access method is described by using an example in which one cell corresponds to two TRPs (that is, in a two-TRP transmission scenario).

FIG. 4 is a schematic flowchart of a random access method according to an embodiment of this application. The method is applicable to interaction between the terminal device and the network device in the foregoing communication system.

As shown in FIG. 4, a procedure of the random access method is as follows.

S401: The network device sends a first message. Correspondingly, the terminal device receives the first message.

The first message may be used to configure, for the terminal device, a first timing advance group (timing advance group, TAG) and a second TAG that are in a same cell (denoted as cell #1). For example, the first message may include information about the first TAG and the second TAG, for example, an index of the first TAG and an index of the second TAG.

The cell #1 is a serving cell that is configured by the network device for the terminal device and that is used for data transmission. In other words, the network device needs to configure a parameter of the cell #1 for the terminal device, so that the terminal device can independently perform data transmission via the cell #1. It may be understood that the cell #1 may correspond to two TRPs. For example, two TRPs are deployed in the cell #1, or the cell #1 has an associated additional cell (described below).

A TAG is a parameter used for TA management, and may be used to maintain a TA value of a TRP. Each TAG corresponds to one TA. To be specific, the first TAG corresponds to one TA (denoted as a first TA); and the second TAG corresponds to one TA (denoted as a second TA). The first TA is different from the second TA. It may be understood that the first TAG corresponds to one TRP in the two TRPs corresponding to the cell #1, for example, a first TRP. In this case, the first TA is a TA corresponding to the first TRP. In other words, when performing uplink transmission to the first TRP, the terminal device needs to use the first TA. The second TAG corresponds to the other TRP in the two TRPs corresponding to the cell #1, for example, a second TRP. In this case, the second TA is a TA corresponding to the second TRP. In other words, when performing uplink transmission to the second TRP, the terminal device needs to use the second TA.

The two TAGs configured by the network device for the terminal device via the first message may be used to maintain TA values of the two TRPs corresponding to the cell #1, and may indicate that the terminal device is in a multi-station joint transmission scenario, namely, a multi-TRP scenario. In this case, the terminal device needs to maintain two downlink timings: a first downlink timing and a second downlink timing. The first downlink timing is associated with the first TAG and the first TRP, and may be determined by measuring a downlink reference signal sent by the first TRP. The second downlink timing is associated with the second TAG and the second TRP, and may be determined by measuring a downlink reference signal sent by the second TRP. The downlink reference signal may be a signal like a synchronization signal and physical broadcast channel block (synchronization signal and physical broadcast channel block, SS/PBCH block, SSB for short), or a tracking reference signal (tracking reference signal, TRS). This may be specifically determined based on an actual situation. This is not limited in embodiments of this application. It may be understood that, when maintaining the first downlink timing and the second downlink timing, the terminal device may associate the first downlink timing with the first TAG, and associate the second downlink timing with the second TAG.

The first message may be further used to configure another configuration parameter that is in the cell #1. The configuration parameter may include a parameter related to an uplink timing, for example, a control channel group. The control channel group may be used to group control channels of the cell #1, and each control channel group corresponds to one TRP in the two TRPs corresponding to the cell #1. For example, a first control channel group corresponds to the foregoing first TRP, and a second control channel group corresponds to the foregoing second TRP. Each control channel group corresponds to one control channel group identifier (CORESETPoolIndex). A value of the control channel group identifier may be 0 or 1, and may be specifically set based on an actual situation. For example, the first control channel group corresponds to a control channel group identifier 0, and the second control channel group corresponds to a control channel group identifier 1; or the first control channel group corresponds to a control channel group identifier 1, and the second control channel group corresponds to a control channel group identifier 0.

The first message may be further used to configure a configuration parameter that is in another cell, and may be specifically flexibly set based on an actual situation. This is not limited.

In addition, the first message may be an RRC message, and the RRC message may include RRC configuration information. In this case, the RRC configuration information may include configuration parameters that are in the cell #1, for example, the first TAG and the second TAG; or the RRC configuration information may include configuration parameters that are in the cell #1 and another cell. For details, refer to the foregoing related descriptions. Details are not described herein again.

S402: The network device sends a PDCCH. Correspondingly, the terminal device receives the PDCCH.

The PDCCH may indicate a path loss resource corresponding to a random access request message. In addition, a TAG corresponding to the PDCCH may be a TAG associated with a TCI state used by the PDCCH, and may be the first TAG or the second TAG.

The random access request message is a random access request message sent by the terminal device to the network device after the terminal device receives the PDCCH. A TAG corresponding to the random access request message may be the first TAG or the second TAG. It may be understood that the TAG corresponding to the random access request message is a TAG corresponding to a TA value determined based on the random access request message, or a TAG corresponding to a TA value included in a random access response message corresponding to the random access request message.

The path loss resource is a resource used to determine a path loss for the random access request message. To be specific, the terminal device may determine, via the path loss resource, the path loss for sending the random access request message. The path loss resource may be a first path loss resource or a second path loss resource. The first path loss resource is a quasi co-location (quasi co-location, QCL) reference signal resource in a transmission configuration indicator (transmission configuration indicator, TCI) state used by the PDCCH, and the first path loss resource may indicate that the TAG corresponding to the PDCCH is the same as the TAG corresponding to the random access request message. The second path loss resource is an SSB indicated in the PDCCH, and the second path loss resource may indicate that the TAG corresponding to the PDCCH is different from the TAG corresponding to the random access request message. A beam corresponding to the SSB may be used to send a preamble. When the path loss resource is the first path loss resource, the TAG corresponding to the PDCCH is the same as the TAG corresponding to the random access request message, that is, a TRP corresponding to the PDCCH is the same as a TRP corresponding to the random access request message. Alternatively, when the path loss resource is the second path loss resource, the TAG corresponding to the PDCCH is different from the TAG corresponding to the random access request message, that is, a TRP corresponding to the PDCCH is different from a TRP corresponding to the random access request message. It can be learned that whether the path loss resource corresponding to the random access request message is the first path loss resource or the second path loss resource may be used to indirectly determine whether the TAG corresponding to the PDCCH is the same as the TAG corresponding to the random access request message.

For example, when the path loss resource is the first path loss resource, if the PDCCH corresponds to the first TAG, the random access request message corresponds to the first TAG; or if the PDCCH corresponds to the second TAG, the random access request message corresponds to the second TAG. When the path loss resource is the second path loss resource, if the PDCCH corresponds to the first TAG, the random access request message corresponds to the second TAG; or if the PDCCH corresponds to the second TAG, the random access request message corresponds to the first TAG.

It may be understood that the path loss resource may be indicated by using a first field in PDCCH signaling, and the first field may reuse a field in the conventional technology or be a newly defined field. For example, the first field is a PRACH association indication field, and a value of the PRACH association indication field may indicate that the path loss resource is the first path loss resource or the second path loss resource. For example, when the value of the PRACH association indication field is 0, it may indicate that the first path loss resource is used for the random access request message; and when the value of the PRACH association indication field is 1, it may indicate that the second path loss resource is used for the random access request message; or when the value of the PRACH association indication field is 0, it may indicate that the second path loss resource is used for the random access request message; and when the value of the PRACH association indication field is 1, it may indicate that the first path loss resource is used for the random access request message.

The PDCCH may further indicate other information, for example, a preamble used for a random access message. In addition, the PDCCH may further include another field like an identifier field of a random access preamble or an SSB identifier field. The identifier field of the random access preamble may indicate a specific preamble to be sent by the terminal device to the network device. The SSB identifier field may indicate a specific SSB corresponding to a beam that is used to send the preamble, and the beam corresponding to the SSB may be understood as a receive beam that is of the terminal device and that corresponds to the SSB.

The PDCCH may indicate the path loss resource when a first condition is met. The first condition may include one or a combination of the following: The network device configures, for the terminal device, two control channel groups that are in the cell #1 (denoted as condition #1), the network device configures, for the terminal device, two TAGs that are in the cell #1 (denoted as condition #2), the network device does not configure, for the terminal device, an additional cell corresponding to the cell #1 (denoted as condition #3), or a TCI state activated by the network device for the terminal device is not associated with an additional cell corresponding to the cell #1 (denoted as condition #4). The condition #1 and the condition #2 may indicate that the cell #1 corresponds to two TRPs; the condition #3 may indicate that no additional cell is configured for the cell #1; and the condition #4 may indicate that the TCI state activated by the network device for the terminal device is not associated with the additional cell corresponding to the cell #1, that is, the additional cell configured for the cell #1 is not used. It may be understood that, when the cell #1 corresponds to a plurality of TRPs, the condition #3 or the condition #4 may indicate a co-cell multi-TRP transmission scenario. It can be learned that the first condition may indicate that a current scenario is a two-TRP transmission scenario. For example, if the first condition includes the condition #1, the condition #2, and the condition #3, it may indicate that the two TRPs are deployed in the cell #1, that is, the current scenario is the two-TRP transmission scenario. The PDCCH may indicate the foregoing path loss resource in the two-TRP transmission scenario.

It may be understood that, in addition to configuring the serving cell (for example, the cell #1) for the terminal device, the network device may further configure, for the terminal device, one or more additional cells associated with the serving cell. The additional cell may be used for data transmission to some extent. However, only one additional cell is activated at a time, and the network device may perform joint transmission via one serving cell and an activated additional cell corresponding to the serving cell, that is, perform cross-cell multi-TRP transmission. In addition, the network device does not need to configure all parameters of the additional cell for the terminal device, but may configure information about the additional cell as a parameter of the serving cell for the terminal device. That is, an additional cell works by depending on a serving cell associated with the additional cell. The additional cell may be represented by using a physical cell identifier (physical cell index/identifier, PCI).

S403: The terminal device determines, based on the path loss resource and the TAG corresponding to the PDCCH, a downlink timing used for the random access request message.

The downlink timing for the random access request message may be the first downlink timing corresponding to the first TAG or the second downlink timing corresponding to the second TAG, and is related to the path loss resource and the TAG corresponding to the PDCCH.

The determining, based on the path loss resource and the TAG corresponding to the PDCCH, the downlink timing used for the random access request message may specifically include: if the PDCCH corresponds to the first TAG, and the path loss resource is the first path loss resource, determining that the first downlink timing is used for the random access request message; or if the PDCCH corresponds to the first TAG, and the path loss resource is the second path loss resource, determining that the second downlink timing is used for the random access request message; or if the PDCCH corresponds to the second TAG, and the path loss resource is the first path loss resource, determining that the second downlink timing is used for the random access request message; or if the PDCCH corresponds to the second TAG, and the path loss resource is the second path loss resource, determining that the first downlink timing is used for the random access request message.

It may be understood that a principle for the terminal device to determine to use the first downlink timing or use the second downlink timing is as follows: A specific TRP to which the random access request message is sent indicates that a downlink timing corresponding to the TRP is used. In other words, if the random access request message is sent to the first TRP, the first downlink timing corresponding to the first TRP is used; or if the random access request message is sent to the second TRP, the second downlink timing corresponding to the first TRP is used. The terminal device may determine, based on the path loss resource and the TAG corresponding to the PDCCH, the TAG corresponding to the random access request message, and then determine, based on the TAG, a specific TRP to which the random access request message is sent. In other words, the terminal device may determine, via the path loss resource being the first path loss resource or the second path loss resource, a relationship between the TAG corresponding to the PDCCH and the TAG corresponding to the random access request message, that is, determine whether the two TAGs are the same; may then determine, based on the relationship and the TAG corresponding to the PDCCH, the TAG corresponding to the random access request message, that is, the random access request message is to be sent to a TRP corresponding to the TAG; and may determine a downlink timing for the random access request message based on the TAG corresponding to the random access request message.

For example, if the PDCCH corresponds to the first TAG, and the path loss resource is the first path loss resource, it indicates that the TAG corresponding to the random access request message is the same as the TAG corresponding to the PDCCH, that is, the random access request message corresponds to the first TAG. In this case, the terminal device is to send the random access request message to the first TRP corresponding to the first TAG. Therefore, the first downlink timing corresponding to the first TAG is used for the random access request message. If the PDCCH corresponds to the first TAG, and the path loss resource is the second path loss resource, it indicates that the TAG corresponding to the random access request message is different from the TAG corresponding to the PDCCH, that is, the random access request message corresponds to the second TAG. In this case, the terminal device is to send the random access request message to the second TRP corresponding to the second TAG. Therefore, the second downlink timing corresponding to the second TAG is used for the random access request message. It may be understood that cases in which the PDCCH corresponds to the second TAG and the path loss resource is the first path loss resource or the second path loss resource are similar to the foregoing cases, and may be understood with reference to the foregoing cases. Details are not described herein again.

The path loss resource corresponding to the random access request message may be indicated by using the first field in the PDCCH. For example, a value of the first field being 0 indicates that the first path loss resource is used for the random access request message; and a value of the first field being 1 indicates that the second path loss resource is used for the random access request message. In this case, the terminal device may determine, based on the value of the first field and the TAG corresponding to the PDCCH, the downlink timing used for the random access request message. For example, if the PDCCH corresponds to the first TAG, and the value of the first field is 0, the first downlink timing is used for the random access request message; or if the PDCCH corresponds to the first TAG, and the value of the first field is 1, the second downlink timing is used for the random access request message; or if the PDCCH corresponds to the second TAG, and the value of the first field is 0, the second downlink timing is used for the random access request message; or if the PDCCH corresponds to the second TAG, and the value of the first field is 1, the first downlink timing is used for the random access request message. It may be understood that, when the value of the first field being 1 indicates that the first path loss resource is used for the random access request message, and the value of the first field being 0 indicates that the second path loss resource is used for the random access request message, a method for determining, based on the value of the first field and the TAG corresponding to the PDCCH, the downlink timing used for the random access request message is similar to the foregoing method, and may be understood with reference to the foregoing content. Details are not described herein again.

In addition, it may be specified that when the first condition is met, the terminal device determines, based on the path loss resource and the TAG corresponding to the PDCCH, the downlink timing used for the random access request message. For the first condition, refer to the related descriptions of "S402". Details are not described herein again. In this way, in a single-TRP scenario, a terminal device is not to determine, based on a path loss resource and a TAG corresponding to a PDCCH, a downlink timing used for a random access request message, so that unnecessary overheads are not generated.

S404: The terminal device sends the random access request message based on the downlink timing used for the random access request message.

After determining the downlink timing used for the random access request message, the terminal device may determine, based on the downlink timing, time (denoted as sending time) at which the random access request message is to be sent, and then send the random access request message based on the sending time. The sending time is the downlink timing used for the random access request message plus TA_offset. In other words, the terminal device may send the random access request message in advance of the downlink timing by TA_offset. For example, if the first downlink timing is used for the random access request message, the sending time for the random access request message is the first downlink timing+TA_offset. A value of TA_offset may be configured by the network device or predefined in a protocol. This is not limited in embodiments of this application.

In conclusion, in this embodiment of this application, the terminal device may determine, based on the path loss resource and the TAG corresponding to the PDCCH, the TAG corresponding to the random access request message, and determine, based on the TAG, a specific TRP to which the random access request message is sent, to determine the downlink timing used for the random access request message. In this way, in the two-TRP transmission scenario, the terminal device can send the random access request message by using a correct downlink timing.

Optionally, with reference to the foregoing embodiment, after the terminal device sends the random access request message based on the downlink timing used for the random access request message, the random access method may further include: The network device sends a random access response message to the terminal device based on the random access request message. Correspondingly, the terminal device receives the random access response message from the network device.

The random access response message may include the TA value and an index of the TAG corresponding to the TA value. The TA value is obtained by the network device through calculation based on the received random access request message. It may be understood that there is a correspondence between the downlink timing used for the random access request message and the TA value. To be specific, if the first downlink timing is used for the random access request message, the TA value is a TA value corresponding to the first TAG; or if the second downlink timing is used for the random access request message, the TA value is a TA value corresponding to the second TAG. In addition, the terminal device may obtain, through two random access procedures, TA values corresponding to two TAGs (the first TAG and the second TAG).

It may be understood that the foregoing content describes the random access method by using an example in which one cell corresponds to two TRPs. When one cell corresponds to more than two TRPs, a random access method is similar to the foregoing method, and a difference lies in that: When the TAG corresponding to the PDCCH is different from the TAG corresponding to the random access request message, that is, when the path loss resource is the second path loss resource, the PDCCH may carry information indicating the TAG corresponding to the random access request message, for example, information indicating a third TAG corresponding to the random access request message. For other content, refer to the related descriptions of "S401" to "404". Details are not described herein again. The following specifically describes, by using an example, the random access method used when one cell corresponds to more than two TRPs.

Step 1: A network device sends a first message. Correspondingly, a terminal device receives the first message.

The first message is used to configure, for the terminal device, a first TAG, a second TAG, and a third TAG that are in a same cell (denoted as cell #1). The first TAG, the second TAG, and the third TAG each correspond to one of three TRPs corresponding to the cell #1. For example, the first TAG corresponds to a first TRP, the second TAG corresponds to a second TRP, and the third TAG corresponds to a third TRP.

Step 2: The network device sends a PDCCH. Correspondingly, the terminal device receives the PDCCH.

The PDCCH indicates a path loss resource corresponding to a random access request message and the third TAG corresponding to the random access request, and the path loss resource is a second path loss resource. In addition, the first TAG corresponds to the PDCCH.

Step 3: The terminal device determines, based on the path loss resource and the TAG corresponding to the PDCCH, a downlink timing used for the random access request message.

That is, it may be determined, based on the second path loss resource and the first TAG corresponding to the PDCCH, that the random access request message does not correspond to the first TAG. In addition, the third TAG corresponding to the random access request message may be determined based on information that is in the PDCCH and that indicates the third TAG corresponding to the random access request message. To be specific, the terminal device is to send the random access request message to the third TRP corresponding to the third TAG. Therefore, a third downlink timing corresponding to the third TAG is used for the random access request message.

Step 4: The terminal device sends the random access request message based on the downlink timing for the random access request message.

The terminal device may determine, based on the third downlink timing plus TA_offset, time at which the random access request message is to be sent, and send the random access request message based on the time. In other words, the terminal device may send the random access request message in advance of the third downlink timing by TA_offset.

It may be understood that step 1 to step 4 are similar to those in the embodiment shown in FIG. 4. For details, refer to the related descriptions of "S401" to "404". Details are not described herein again.

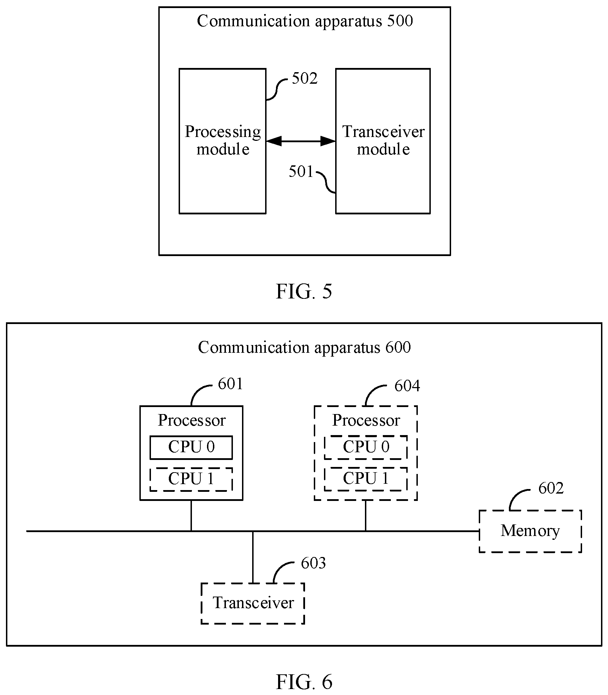

The foregoing describes, in detail with reference to FIG. 4, the random access method provided in embodiments of this application. The following describes, in detail with reference to FIG. 5 and FIG. 6, communication apparatuses configured to perform the random access method provided in embodiments of this application.

FIG. 5 is a diagram 1 of a structure of a communication apparatus according to an embodiment of this application. For example, as shown in FIG. 5, the communication apparatus 500 includes a transceiver module 501 and a processing module 502. For ease of description, FIG. 5 shows only main components of the communication apparatus.

In some embodiments, the communication apparatus 500 is applicable to the foregoing communication system, and performs a function of the terminal device in the foregoing random access method.

The transceiver module 501 is configured to receive a first message, where the first message is used to configure, for the terminal device, a first TAG and a second TAG that are in a same cell. The transceiver module 501 is further configured to receive a PDCCH, where the PDCCH indicates a path loss resource corresponding to a random access request message, and a TAG corresponding to the PDCCH is the first TAG or the second TAG. The processing module 502 is configured to determine, based on the path loss resource and the TAG corresponding to the PDCCH, a downlink timing used for the random access request message, where the downlink timing is a first downlink timing corresponding to the first TAG or a second downlink timing corresponding to the second TAG. The transceiver module 501 is further configured to send the random access request message based on the downlink timing.

In a possible design solution, the path loss resource is a first path loss resource or a second path loss resource, the first path loss resource is a QCL reference signal resource in a TCI state used by the PDCCH, and the second path loss resource is an SSB indicated in the PDCCH.

Optionally, when the path loss resource is the first path loss resource, the TAG corresponding to the PDCCH is the same as a TAG corresponding to the random access request message; or when the path loss resource is the second path loss resource, the TAG corresponding to the PDCCH is different from a TAG corresponding to the random access request message.

Further, when the path loss resource is the second path loss resource, if the PDCCH corresponds to the first TAG, the random access request message corresponds to the second TAG; or if the PDCCH corresponds to the second TAG, the random access request message corresponds to the first TAG.

Optionally, the processing module 502 is specifically configured to: if the PDCCH corresponds to the first TAG, and the path loss resource is the first path loss resource, determine that the first downlink timing is used for the random access request message; or if the PDCCH corresponds to the first TAG, and the path loss resource is the second path loss resource, determine that the second downlink timing is used for the random access request message; or if the PDCCH corresponds to the second TAG, and the path loss resource is the first path loss resource, determine that the second downlink timing is used for the random access request message; or if the PDCCH corresponds to the second TAG, and the path loss resource is the second path loss resource, determine that the first downlink timing is used for the random access request message.

In a possible design solution, the TAG corresponding to the PDCCH is a TAG associated with the TCI state used by the PDCCH.

In a possible design solution, the processing module 502 is specifically configured to: when a first condition is met, determine, based on the path loss resource and the TAG corresponding to the PDCCH, the downlink timing used for the random access request message, where the first condition includes one or a combination of the following: The network device configures, for the terminal device, two control channel groups that are in the cell, the network device configures, for the terminal device, two TAGs that are in the cell, the network device does not configure, for the terminal device, an additional cell corresponding to the cell, or a TCI state activated by the network device for the terminal device is not associated with an additional cell corresponding to the cell.

Optionally, the transceiver module 501 may include a sending module (not shown in FIG. 5) and a receiving module (not shown in FIG. 5). The sending module is configured to implement a sending function of the communication apparatus 500, and the receiving module is configured to implement a receiving function of the communication apparatus 500.

Optionally, the communication apparatus 500 may further include a storage module (not shown in FIG. 5). The storage module stores a program or instructions. When the processing module 502 executes the program or the instructions, the communication apparatus 500 may perform a function of the terminal device in the method shown in FIG. 4 in the foregoing methods.

It may be understood that the communication apparatus 500 may be a terminal device, or may be a chip (system) or another component or assembly that may be disposed in a terminal device, or may be an apparatus including a terminal device. This is not limited in this application.

In addition, for technical effects of the communication apparatus 500, refer to the technical effects of the random access method shown in FIG. 4. Details are not described herein again.

FIG. 6 is a diagram 2 of a structure of a communication apparatus according to an embodiment of this application. For example, the communication apparatus may be a terminal device, or may be a chip (system) or another component or assembly that may be disposed in a terminal device. As shown in FIG. 6, the communication apparatus 600 may include a processor 601. Optionally, the communication apparatus 600 may further include a memory 602 and/or a transceiver 603. The processor 601 is coupled to the memory 602 and the transceiver 603, for example, may be connected by using a communication bus.

Each component of the communication apparatus 600 is described below in detail with reference to FIG. 6.

The processor 601 is a control center of the communication apparatus 600, and may be one processor, or may be a collective term of a plurality of processing elements. For example, the processor 601 is one or more central processing units (central processing unit, CPU), or may be an application-specific integrated circuit (application-specific integrated circuit, ASIC), or is configured as one or more integrated circuits implementing embodiments of this application, for example, one or more microprocessors (digital signal processor, DSP) or one or more field programmable gate arrays (field programmable gate array, FPGA).

Optionally, the processor 601 may run or execute a software program stored in the memory 602, and invoke data stored in the memory 602, to perform various functions of the communication apparatus 600, for example, perform the foregoing random access method.

During specific implementation, in an embodiment, the processor 601 may include one or more CPUs, for example, a CPU 0 and a CPU 1 shown in FIG. 6.

During specific implementation, in an embodiment, the communication apparatus 600 may alternatively include a plurality of processors, for example, the processor 601 and a processor 604 shown in FIG. 6. Each of these processors may be a single-core processor (single-CPU) or may be a multi-core processor (multi-CPU). The processor herein may be one or more devices, circuits, and/or processing cores configured to process data (for example, computer program instructions).

The memory 602 is configured to store a software program for executing the solutions in this application, and the processor 601 controls execution. For a specific implementation, refer to the foregoing method embodiments. Details are not described herein again.

Optionally, the memory 602 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 602 may be integrated with the processor 601, or may exist independently, and is coupled to the processor 601 through an interface circuit (not shown in FIG. 6) of the communication apparatus 600. This is not specifically limited in embodiments of this application.

The transceiver 603 is configured to communicate with another communication apparatus. For example, the communication apparatus 600 is the terminal device, and the transceiver 603 may be configured to communicate with a network apparatus or communicate with another terminal device.

Optionally, the transceiver 603 may include a receiver and a transmitter (not separately shown in FIG. 6). The receiver is configured to implement a receiving function, and the transmitter is configured to implement a sending function.

Optionally, the transceiver 603 may include a transmitter, a receiver, a radio frequency circuit, an antenna, and an input/output apparatus (not separately shown in FIG. 6). The transmitter is configured to implement a sending function. The receiver is configured to implement a receiving function. The radio frequency circuit is mainly configured to: perform conversion between a baseband signal and a radio frequency signal, and process the radio frequency signal. The antenna is mainly configured to: receive and send the radio frequency signal in a form of an electromagnetic wave. The input/output apparatus may include a touchscreen, a display, a keyboard, or the like. The input/output apparatus is mainly configured to: receive data input by a user, and output data to the user. It needs to be noted that some types of terminal devices may not have the input/output apparatus.

When needing to send data, after performing baseband processing on the to-be-sent data, the processor outputs a baseband signal to the radio frequency circuit. Then, the radio frequency circuit performs radio frequency processing on the baseband signal, and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data, and processes the data. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver module of the terminal device, and the processor having a processing function may be considered as a processing module of the terminal device.

Optionally, the transceiver 603 may be integrated with the processor 601, or may exist independently, and is coupled to the processor 601 through an interface circuit (not shown in FIG. 6) of the communication apparatus 600. This is not specifically limited in embodiments of this application.

When the communication apparatus 600 is a communication chip, the transceiver 603 may be an input interface and an output interface of the chip. The input interface is configured to implement a receiving function, and the output interface is configured to implement a sending function. The processor may be a processing module, a microprocessor, or an integrated circuit integrated on the chip. The sending operation of the network device or the terminal device in the foregoing method embodiments may be understood as an output of the chip, and the receiving operation of the network device or the terminal device in the foregoing method embodiments may be understood as an input of the chip.

It may be understood that, the structure of the communication apparatus 600 shown in FIG. 6 does not constitute a limitation on the communication apparatus. An actual communication apparatus may include more or fewer components than those shown in the figure, combine some components, or have different component arrangement.

In addition, for technical effects of the communication apparatus 600, refer to the technical effects of the method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in this embodiment of this application may be a volatile memory or a nonvolatile memory, or may include the volatile memory and the nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example, and not limitation, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network apparatus, or the like) to perform all or some of the steps in the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A random access method, wherein the method comprises:
receiving a first message, wherein the first message is used to configure, for a terminal device, a first control channel group and a second control channel group that are in a same cell;
receiving a physical downlink control channel PDCCH, wherein the PDCCH indicates a path loss resource corresponding to a random access request message;
determining, based on the path loss resource and a control channel group corresponding to the PDCCH, a downlink timing used for the random access request message, wherein the downlink timing is a first downlink timing corresponding to the first control channel group or a second downlink timing corresponding to the second control channel group; and
sending the random access request message based on the downlink timing.

2. The method according to claim 1, wherein the path loss resource is a first path loss resource or a second path loss resource, the first path loss resource is a quasi co-location QCL reference signal resource in a transmission configuration indicator TCI state used by the PDCCH, and the second path loss resource is a synchronization signal and physical broadcast channel block SSB indicated in the PDCCH.

3. The method according to claim 2, wherein the determining, based on the path loss resource and the control channel group corresponding to the PDCCH, the downlink timing used for the random access request message comprises:
if the PDCCH corresponds to the first control channel group, and the path loss resource is the first path loss resource, determining that the first downlink timing is used for the random access request message; or
if the PDCCH corresponds to the first control channel group, and the path loss resource is the second path loss resource, determining that the second downlink timing is used for the random access request message; or
if the PDCCH corresponds to the second control channel group, and the path loss resource is the first path loss resource, determining that the second downlink timing is used for the random access request message; or
if the PDCCH corresponds to the second control channel group, and the path loss resource is the second path loss resource, determining that the first downlink timing is used for the random access request message.

4. The method according to any one of claims 1 to 3, wherein the determining, based on the path loss resource and the control channel group corresponding to the PDCCH, the downlink timing used for the random access request message comprises:
when a first condition is met, determining, based on the path loss resource and the control channel group corresponding to the PDCCH, the downlink timing used for the random access request message, wherein
the first condition comprises one or a combination of the following: the network device configures, for the terminal device, two control channel groups that are in the cell, the network device configures, for the terminal device, two TAGs that are in the cell, or the network device does not configure, for the terminal device, an additional cell corresponding to the cell.

5. A communication apparatus, wherein the apparatus comprises a transceiver module and a processing module, wherein
the transceiver module is configured to receive a first message, wherein the first message is used to configure, for a terminal device, a first control channel group and a second control channel group that are in a same cell;
the transceiver module is further configured to receive a physical downlink control channel PDCCH, wherein the PDCCH indicates a path loss resource corresponding to a random access request message;
the processing module is configured to determine, based on the path loss resource and a control channel group corresponding to the PDCCH, a downlink timing used for the random access request message, wherein the downlink timing is a first downlink timing corresponding to the first control channel group or a second downlink timing corresponding to the second control channel group; and
the transceiver module is further configured to determine, based on the path loss resource and the control channel group corresponding to the PDCCH, the downlink timing used for the random access request message, wherein the downlink timing is the first downlink timing corresponding to the first control channel group or the second downlink timing corresponding to the second control channel group.

6. The apparatus according to claim 5, wherein the path loss resource is a first path loss resource or a second path loss resource, the first path loss resource is a quasi co-location QCL reference signal resource in a transmission configuration indicator TCI state used by the PDCCH, and the second path loss resource is a synchronization signal and physical broadcast channel block SSB indicated in the PDCCH; and
if the PDCCH corresponds to the second control channel group, the random access request message corresponds to the first control channel group.

7. The apparatus according to claim 6, wherein that the processing module is further configured to determine, based on the path loss resource and the control channel group corresponding to the PDCCH, the downlink timing used for the random access request message comprises:
the processing module is further configured to: if the PDCCH corresponds to the first control channel group, and the path loss resource is the first path loss resource, determine that the first downlink timing is used for the random access request message; or
if the PDCCH corresponds to the first control channel group, and the path loss resource is the second path loss resource, determine that the second downlink timing is used for the random access request message; or
if the PDCCH corresponds to the second control channel group, and the path loss resource is the first path loss resource, determine that the second downlink timing is used for the random access request message; or
if the PDCCH corresponds to the second control channel group, and the path loss resource is the second path loss resource, determine that the first downlink timing is used for the random access request message.

8. The apparatus according to any one of claims 5 to 7, wherein that the processing module is further configured to determine, based on the path loss resource and the control channel group corresponding to the PDCCH, the downlink timing used for the random access request message comprises:
the processing module is configured to: when a first condition is met, determine, based on the path loss resource and the control channel group corresponding to the PDCCH, the downlink timing used for the random access request message, wherein
the first condition comprises one or a combination of the following: the network device configures, for the terminal device, two control channel groups that are in the cell, the network device configures, for the terminal device, two TAGs that are in the cell, or the network device does not configure, for the terminal device, an additional cell corresponding to the cell.

9. A communication chip, wherein the communication chip comprises: a logic circuit and a communication interface, wherein the logic circuit is configured to execute computer instructions, the communication interface is used for the communication chip to communicate with another apparatus or chip, and when the logic circuit executes the computer instructions, the method according to any one of claims 1 to 4 is implemented.

10. A computer-readable storage medium, wherein the computer-readable storage medium comprises a computer program or instructions, and when the computer program or the instructions are run on a communication apparatus, the communication apparatus is caused to perform the method according to any one of claims 1 to 4.

11. A computer program product, wherein the computer program product comprises a computer program or instructions, and when the computer program or the instructions are executed by a communication apparatus, the method according to any one of claims 1 to 4 is performed.
